(19) Europäisches Patentamt
European Patent Office
Office européen des brevets

(11) **EP 2 963 802 B1**

(12) **FASCICULE DE BREVET EUROPEEN**

(45) Date de publication et mention
de la délivrance du brevet:
**16.05.2018 Bulletin 2018/20**

(51) Int Cl.:
***H02P 6/21*** *(2016.01)*

(21) Numéro de dépôt: **15171031.6**

(22) Date de dépôt: **08.06.2015**

(54) **PROCÉDÉ DE COMMANDE POUR LE DÉMARRAGE D'UN MOTEUR ÉLECTRIQUE SYNCHRONE**

STEUERUNGSVERFAHREN ZUM ANLASSEN EINES ELEKTRISCHEN SYNCHRONMOTORS

CONTROL METHOD FOR STARTING A SYNCHRONOUS ELECTRIC MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2014 FR 1456154**

(43) Date de publication de la demande:
**06.01.2016 Bulletin 2016/01**

(73) Titulaire: **Schneider Toshiba Inverter Europe SAS**
**27120 Pacy sur Eure (FR)**

(72) Inventeurs:
• **Malrait, François**
**27120 Jouy sur Eure (FR)**

• **Devos, Thomas**
**78955 Carrières sous Poissy (FR)**
• **Fehringer, Rudolf**
**1230 Wien (AT)**

(74) Mandataire: **Dufresne, Thierry et al**
**Schneider Electric Industries SAS**
**Service Propriété Industrielle**
**35 rue Joseph Monier - CS 30323**
**92506 Rueil-Malmaison Cedex (FR)**

(56) Documents cités:
**US-A- 5 844 397      US-A1- 2006 049 795**
**US-B1- 7 508 160**

EP 2 963 802 B1

## Description

### Domaine technique de l'invention

La présente invention se rapporte à un procédé de commande mis en oeuvre pour le démarrage d'un moteur électrique synchrone.

L'invention se rapporte également à un convertisseur de puissance comprenant une unité de commande agencée pour mettre en oeuvre ledit procédé de commande.

### Etat de la technique

Pour démarrer un moteur électrique synchrone, il est nécessaire de connaître la position de son rotor. En fonctionnement en boucle ouverte, c'est-à-dire sans employer de capteur mécanique (vitesse, position), il existe des méthodes pour estimer la position du rotor du moteur électrique. Une solution consiste à injecter un courant continu dans les phases de sortie pour faire tourner le rotor jusqu'à son alignement.

Le document US 7,202,618 propose une autre solution qui consiste à envoyer des impulsions de tension sur chacune des phases du moteur pendant une période déterminée et à déterminer les pics des courants ayant circulés dans les phases du moteur. Ensuite, par comparaison entre les courants obtenus pour chaque phase et à partir de relations entre les courants, la position initiale du rotor peut être obtenue par calcul. Le document US7508160B1 propose une solution qui consiste à forcer la vitesse de rotation. Cependant, ces solutions ne sont pas toujours adaptées à l'architecture globale employée. En effet, si le variateur de vitesse est connecté au moteur électrique synchrone à aimant permanent via un filtre sinus, un transformateur et des longs câbles, les solutions connues pour déterminer la position du rotor du moteur électrique ne seront pas opérationnelles. L'injection prolongée d'un courant continu, et donc l'application d'une tension continue, aura tendance à saturer le transformateur empêchant alors toute détection de position. La deuxième solution par impulsions de tension ne pourra tout simplement pas être appliquée du fait de la présence d'éléments de filtrages passifs entre le variateur de vitesse et le moteur électrique.

Le but de l'invention est donc de proposer un procédé de commande permettant le démarrage d'un moteur électrique synchrone, même si celui-ci est intégré à une architecture telle que décrite ci-dessus, c'est-à-dire incluant également un filtre sinus, un transformateur, et des longs câbles.

### Exposé de l'invention

Ce but est atteint par un procédé de commande mis en oeuvre dans une unité de commande d'un convertisseur de puissance connecté par trois phases de sortie à un moteur électrique synchrone, ladite unité de commande étant agencée pour mettre en oeuvre une loi de commande principale pour commander le moteur électrique synchrone, ledit procédé de commande étant agencé pour remplacer ladite loi de commande principale lors du démarrage du moteur électrique synchrone et comprend :

- Une première étape de détermination des tensions à appliquer sur les phases de sortie en fonction d'un courant de référence, ledit courant de référence ayant une valeur au moins supérieure à une première valeur seuil nécessaire au démarrage du moteur électrique synchrone,
- Une deuxième étape de détermination d'une fréquence à appliquer au stator en fonction d'une fréquence statorique, ladite fréquence statorique étant choisie supérieure à une deuxième valeur seuil déterminée,
- Une étape d'application de la première étape et de la deuxième étape pendant une durée déterminée, au moins égale à l'inverse de la fréquence statorique, en vue de permettre que le rotor du moteur électrique synchrone tourne à la fréquence statorique appliquée, Une étape de diminution du courant de référence au dessous de ladite première valeur seuil,
- Une étape de commutation vers la loi de commande principale du moteur électrique synchrone une fois que le rotor tourne à une vitesse correspondant à ladite fréquence statorique.

Selon une particularité du procédé de commande de l'invention, le courant de référence est maintenu à une valeur constante pendant la première étape.

Selon une autre particularité, le procédé de commande comporte une étape préalable d'application d'une rampe pour le courant de référence pour le monter jusqu'à ladite valeur constante.

Selon une autre particularité, la fréquence statorique est également maintenue à une valeur constante pendant la deuxième étape. L'invention concerne également un système de commande d'un moteur électrique synchrone comprenant une unité de commande comportant une loi de commande principale exécutable pour commander le moteur électrique synchrone et une séquence de démarrage agencée pour remplacer ladite loi de commande principale lors du démarrage du moteur électrique synchrone, ladite unité de commande comprenant :

- Un premier module de détermination des tensions à appliquer sur les phases de sortie en fonction d'un courant de référence, ledit courant de référence ayant une valeur au moins supérieure à une première valeur seuil nécessaire au démarrage du moteur électrique synchrone,
- Un deuxième module de détermination d'une fréquence à appliquer au stator en fonction d'une fréquence statorique, ladite fréquence statorique étant choisie supérieure à une deuxième valeur seuil déterminée, lesdits premier module et deuxième module étant exécutés pendant une durée déterminée, au moins égale à l'inverse de la fréquence statorique, en vue de permettre que le rotor du moteur électrique synchrone tourne à la fréquence statorique appliquée,

- Un module de commutation vers la loi de commande principale du moteur électrique synchrone une fois que le rotor tourne à une vitesse correspondant à ladite fréquence statorique.

Avantageusement, le système de commande comporte un convertisseur de puissance connecté au moteur électrique synchrone par trois phases de sortie et commandé par ladite unité de commande.

Avantageusement, le convertisseur de puissance est connecté au moteur électrique synchrone via un filtre sinus et un transformateur.

**Brève description des figures**

D'autres caractéristiques et avantages vont apparaître dans la description détaillée qui suit faite en regard des dessins annexés dans lesquels :

- la figure 1 représente un exemple d'architecture dans lequel le procédé de commande de l'invention peut être plus particulièrement employé,

- la figure 2 représente, de manière schématique, un diagramme illustrant le procédé de commande de l'invention mis en oeuvre pour le démarrage du moteur électrique synchrone,

- les figures 3A et 3B représentent des courbes de courant et de fréquence illustrant la séquence de démarrage de l'invention,

- les figures 4A et 4B illustrent une variante de réalisation de la séquence représentée sur les figures 3A et 3B.

**Description détaillée d'au moins un mode de réalisation**

Le procédé de commande est mis en oeuvre dans une unité de commande UC et est agencé pour permettre le démarrage d'un moteur électrique de type synchrone. Avantageusement, le moteur électrique M est de type synchrone triphasé à aimants permanents.

Avantageusement, l'unité de commande UC pourra être agencée à l'intérieur d'un convertisseur de puissance de type variateur de vitesse D.

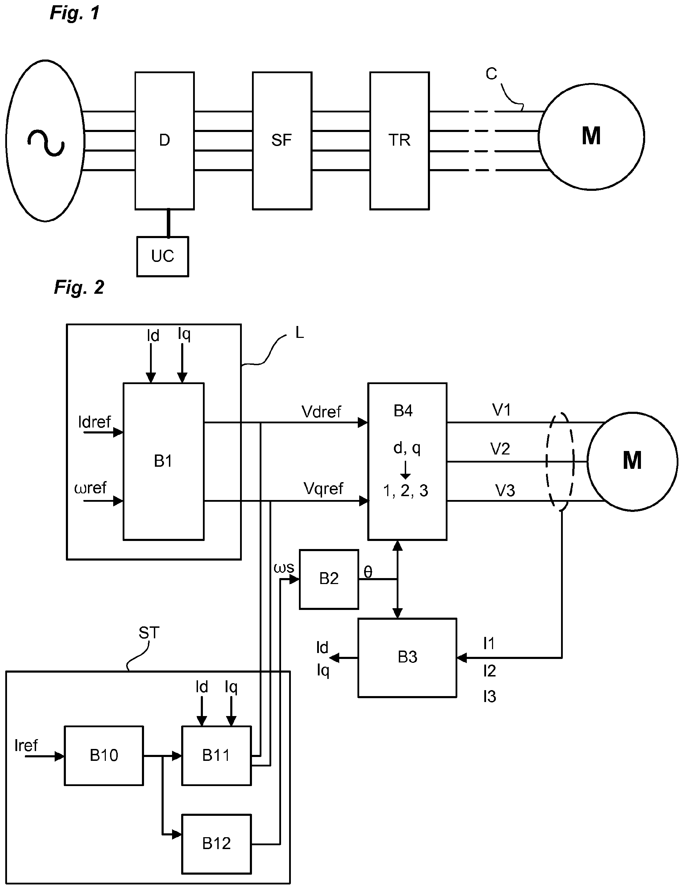

Ce procédé est particulièrement adapté pour commander le démarrage du moteur électrique M synchrone à aimants permanents lorsque celui-ci est connecté au variateur de vitesse D via un filtre sinus SF, un transformateur TR et des longs câbles C, par exemple d'une longueur supérieure à deux kilomètres. Cette architecture est représentée sur la figure 1. Dans la suite de la description, le procédé de l'invention sera décrit en liaison avec cette architecture. Cependant, il faut comprendre que le procédé de l'invention peut aussi être mis en oeuvre pour une architecture différente.

En référence à la figure 1, le variateur de vitesse D est connecté en amont à un réseau de distribution électrique N par trois phases d'entrée R, S, T. De manière connue, le variateur de vitesse D comporte un étage d'entrée composé d'un redresseur, par exemple de type pont de diodes, agencé pour redresser la tension alternative fournie par le réseau N. Le variateur de vitesse D comporte également un bus continu d'alimentation connecté au redresseur et comprenant deux lignes d'alimentation reliées entre elles par un ou plusieurs condensateurs de bus. Le variateur de vitesse comporte également un étage de sortie composé d'un onduleur recevant une tension continue fournie par le bus continu d'alimentation et commandé pour fournir des tensions variables en sortie au moteur électrique M synchrone. Dans l'architecture représentée sur la figure 1, le variateur de vitesse D est connecté en sortie par trois phases de sortie U, V, W à un filtre sinus SF. De manière connue, un filtre sinus est un filtre passe-bas qui permet de fournir des tensions moteur entre phases qui sont sinusoïdales. Le filtre sinus SF est pour sa part connecté à un transformateur TR chargé de transformer une basse tension en une haute tension. Le transformateur TR est ensuite relié au moteur électrique M synchrone via de longs câbles. Le procédé de commande de l'invention sera particulièrement efficace lorsque les câbles présentent une longueur supérieure à deux kilomètres. Sur la figure 1, un fil supplémentaire est employé pour les raccordements à la terre.

De manière connue, l'unité de commande UC du variateur de vitesse D met en oeuvre une loi de commande principale L pour commander l'onduleur et déterminer les tensions de sortie nécessaires au fonctionnement du moteur électrique M (bloc B1 sur la figure 1). Classiquement, cette loi de commande principale L comporte en entrée une vitesse (ou fréquence) de référence $\omega$ref à partir de laquelle elle détermine un courant de couple de référence (non représenté). Elle reçoit également en entrée un courant de flux de référence Idref. A partir du courant de couple de référence et du courant de flux de référence et des mesures ou estimations du courant de flux Id et du courant de couple Iq, elle détermine des tensions de référence Vdref, Vqref à partir desquelles sont déterminées les tensions simples V1, V2, V3 à appliquer sur chaque phase de sortie (bloc B4).

Au démarrage du moteur électrique M synchrone, la position du rotor est inconnue de l'unité de commande UC du variateur de vitesse D empêchant la mise en oeuvre de la loi de commande principale L. Au démarrage du moteur électrique M synchrone, une séquence spécifique doit être mise en oeuvre pour s'assurer que la position du rotor est connue. Le procédé de commande de l'invention permet de créer une séquence de démarrage ST (figure 2) en rotation du moteur. Pour le démarrage du moteur électrique synchrone, le procédé de commande de l'invention se substitue ainsi à la loi de commande principale L.

En référence à la figure 2, le procédé de commande de l'invention, mis en oeuvre dans l'unité de commande pour le démarrage du moteur électrique synchrone, comporte les étapes principales décrites ci-dessous.

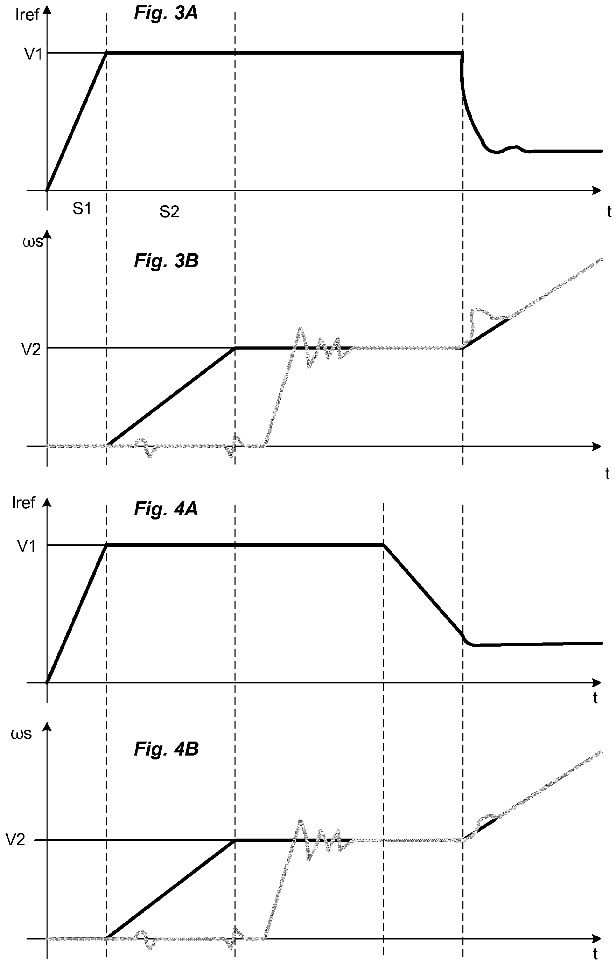

Dans une première étape, le procédé de commande consiste à déterminer et appliquer un courant de référence Iref (bloc B10). Ce courant de référence Iref est choisi à une valeur supérieure à une première valeur seuil, correspondant au minimum de courant à appliquer pour faire tourner le moteur électrique synchrone, c'est-à-dire correspondant au minimum du courant de charge. La figure 3A représente la trajectoire du courant de référence Iref appliqué en entrée. Sur cette figure 3A, on peut voir une rampe de montée en courant jusqu'à une valeur V1 qui est choisie supérieure à ladite première valeur seuil (S1). Le courant de référence Iref est ensuite maintenue à la valeur V1 (S2). Préférentiellement, comme représenté sur la figure 3A, la valeur V1 atteinte est choisie constante et le courant est maintenu à cette valeur pendant toute la séquence de démarrage ST. Le choix des valeurs de courant et de fréquence s'explique par le raisonnement décrit ci-dessous.

L'étude décrite ne prend pas en compte le filtre sinus mais peut être étendue sans difficulté.

Considérons les différentes parties du système. Les équations simplifiées du transformateur sur une phase sont :

$$n_1 \frac{d\varphi}{dt} = u_1$$

$$n_2 \frac{d\varphi}{dt} = u_2$$

$$n_1 i_1 - n_2 i_2 = \Re \varphi$$

Avec $u_1$ et $i_1$ la tension et le courant au primaire du transformateur, $u_2$ et $i_2$ la tension et le courant au secondaire du transformateur, $n_1$ et $n_2$ le nombre de spires respectivement au primaire et au secondaire du transformateur, $\varphi$ le flux magnétique, et $\Re$ la reluctance du transformateur.

Si on considère un transformateur parfait $(\Re = 0)$, on retrouve les relations basiques du transformateur :

$$\frac{u_2}{u_1} = \frac{n_2}{n_1} = \frac{i_1}{i_2}$$

Dans la réalité, la reluctance est non nulle et il faut considérer la saturation du flux du transformateur. Une manière de considérer cette saturation est d'avoir une reluctance variable $\Re(\varphi)$ dépendant du flux linéaire équivalent. $\Re$ augmente avec le flux. Dans ce cas, le courant magnétisant et le courant au primaire augmentent rapidement.

D'un point de vue contrôle, le courant au primaire du transformateur n'est plus représentatif du courant au secondaire, donc du courant dans le moteur électrique synchrone. D'un point de vue électronique, l'augmentation du courant génère des pertes supplémentaires et donc un échauffement thermique plus important. Il faut donc éviter cette zone de saturation et rester dans la partie linéaire du transformateur.

Sans perte de généralité, considérons une tension sinusoïdale simple :

$$u_1 = U_{mod} \sin(\omega t - \alpha)$$

Avec :

- $U_{mod}$ l'amplitude de la tension à l'instant t,

- w la pulsation de la tension.

- $\alpha$ la phase de la tension

L'intégration de cette tension nous donne le flux suivant :

$$\varphi = -\frac{U_{mod}}{n_1 \cdot \omega} \cos(\omega t - \alpha) + cst$$

On voit donc qu'on a une relation entre la pulsation de la tension et l'amplitude de la tension pour garantir un flux inférieur au seuil de saturation du flux.

Considérons maintenant les équations du moteur. En régime stabilisé (moteur en rotation à une fréquence fixe et courants stabilisés), dans le repère tournant d'angle $\theta_s$, nous avons :

$$u_{sd} = R_s i_d - \omega_s L_q i_q$$

$$u_{sq} = R_s i_q - \omega_s L_d i_d + \omega_r \Phi_m$$

$$\omega_r = \omega_s$$

$$\frac{d\theta_s}{dt} = \omega_s$$

Avec :

- $R_s$ la résistance du stator,

- $L_d$ et $L_q$ les inductances d'axes d et q du moteur.

- $\omega_s$ la fréquence statorique,

- $i_d$ le courant de flux mesuré,

- iq le courant de couple mesuré,

- $u_{sd}$ la tension d'axe d dans le repère d,q d'angle $\theta_s$,

- $u_{sq}$ la tension d'axe qn dans le repère d,q d'angle $\theta_s$,

- $\Phi_m$ le flux permanent du moteur,

- $n_p$ le nombre de pairs de pôles.

Enfin, considérons l'équation du système liée à l'application (équation mécanique du moteur). L'application fournissant un couple de charge résistif $\tau_c$, le couple électromoteur $\tau_m$ doit être supérieur au couple de charge afin de démarrer le moteur. Dans le repère de park d,q lié au moteur, nous avons :

$$\tau_m = \frac{3}{2} n_p (\Phi_m i_q + (L_d - L_q) i_d\, i_q) \geq \tau_c$$

Cette contrainte peut s'écrire comme une contrainte sur le module du courant

$$\|i(t)\| = \sqrt{i_d^2 + i_q^2} > I_c,$$ avec $I_c$ la valeur de courant minimale permettant de vérifier la contrainte sur le couple.

Considérons le système complet, nous avons :

- Les équations du moteur donnant une relation d'égalité entre la tension, le courant et la fréquence statorique.

- L'application donnant une contrainte sur le niveau de courant.

- Le transformateur donnant une contrainte entre le niveau de tension et la fréquence statorique.

Si on considère des trajectoires non constantes en vitesse et courant, la généralisation de la contrainte du système complet revient à écrire (en considérant des tensions sinusoïdales) :

Pour tout T,

$$\int_0^T \left( V(i(t), \omega(t)) \sin\left( \int \omega(t) \right) \right) dt < \varphi_{max}$$
avec $\|i(t)\| > I_c$,

où $\varphi_{max}$ est le flux maximal admissible par le transformateur avant saturation.

A partir du courant de référence Iref et des valeurs mesurées pour le courant de flux Id et le courant de couple Iq, l'unité de commande du variateur de vitesse D détermine les tensions de flux Vdref et de couple de référence Vqref. A partir de ces tensions de flux et de couple de référence, l'unité de commande UC détermine les tensions simples V1, V2, V3 à appliquer sur chaque phase de sortie (bloc B11).

Dans une deuxième étape, l'unité de commande UC détermine une fréquence statorique ωs tenant compte du niveau du courant de référence Iref appliqué (bloc B12). La fréquence statorique ωs est choisie à une valeur la plus basse possible mais supérieure à une deuxième valeur seuil, synonyme de saturation du transformateur, comme expliqué par la démonstration ci-dessus. La figure 3B représente la trajectoire de la fréquence statorique ωs appliquée en entrée. Sur cette figure 3B, on peut voir que la fréquence statorique ωs est d'abord choisie nulle lors de la rampe de montée du courant puis elle suit une rampe de montée une fois que le courant de référence Iref a atteint sa valeur constante. Ensuite la fréquence statorique ωs est préférentiellement stabilisée à sa valeur constante V2 choisie. Elle est stabilisée à cette valeur V2 jusqu'à la fin de la séquence de démarrage. Sur la figure 3B, la courbe grise représente la fréquence du rotor et donc la vitesse réelle du moteur électrique.

L'unité de commande UC met en oeuvre un module d'intégration de la fréquence statorique (bloc B2) en vue de déterminer un angle θ définissant les trois composantes V1, V2, V3 du vecteur tension V dans le repère 1, 2, 3 selon les relations suivantes :

$$V_1 = \|V\|.\cos\theta$$

$$V_2 = \|V\|.\cos\left(\theta - \frac{2\pi}{3}\right)$$

$$V_3 = \|V\|.\cos\left(\theta + \frac{2\pi}{3}\right)$$

L'angle déterminé sera également employé pour estimer les courants de flux Id et de couple Iq à partir des courants I1, I2, I3 mesurés sur les trois phases de sortie U, V, W.

Comme lors du démarrage du moteur, le rotor n'est pas aligné, la fréquence réelle du rotor ne suit pas la fréquence statorique ωs (figure 3B). L'unité de commande maintient alors la commande en courant et en fréquence pendant un temps défini (temps au moins supérieur à l'inverse de la fréquence statorique) afin de garantir la rotation du moteur (donc que la vitesse moteur soit égale à la vitesse de référence).

Une fois le rotor accroché, l'unité de commande connaît la fréquence du moteur, celle-ci étant égale à la fréquence de la tension délivrée par le variateur de vitesse, ainsi qu'une estimation de l'angle θ du rotor.

L'unité de commande commute alors la commande du moteur électrique synchrone vers la loi de commande principale L. Les tensions de référence Vdref et Vqref sont calculées dans ce cas par la loi de commande principale L. L'ensemble des états de la loi de commande sont mis à jour dans la transition afin d'assurer la continuité des variables. Sur la figure 3B, on peut voir que la commutation vers la loi de commande principale L provoque une perturbation sur la fréquence réelle du stator lorsque le courant de référence est diminué trop rapidement. Dans un mode de réalisation avantageux de l'invention, après que la fréquence réelle du rotor a rejoint la fréquence statorique ωs et avant la commutation vers la loi de commande principale L, le courant de référence Iref est diminué progressivement selon une rampe descendante. La commutation vers la loi de commande principale L est ainsi réalisée lorsque le courant a atteint sa valeur basse choisie, ce qui permet d'atténuer la perturbation en fréquence. Les figures 4A et 4B permettent d'illustrer ce principe avantageux de commande. Sur la figure 4B, la courbe grise représente la fréquence du rotor et donc la vitesse réelle du moteur électrique.

**Revendications**

1. Procédé de commande mis en oeuvre dans une unité de commande (UC) d'un convertisseur de puissance connecté par trois phases de sortie à un moteur électrique (M) synchrone, ladite unité de commande étant agencée pour mettre en oeuvre une loi de commande principale (L) pour commander le moteur électrique synchrone, **caractérisé en ce que** ledit procédé de commande est agencé pour remplacer ladite loi de commande principale (L) lors du démarrage du moteur électrique (M) synchrone et **en ce qu'**il comprend :

   - Une première étape d'application d'un courant de référence pour déterminer des tensions à appliquer sur les phases de sortie en fonction du courant de référence (Iref), ledit courant de référence ayant une valeur au moins supérieure à une première valeur seuil nécessaire au démarrage du moteur électrique synchrone,
   - Une deuxième étape d'application d'une fréquence statorique (ωs) en fonction dudit courant de référence, ladite fréquence statorique (ωs) ayant une valeur initiale nulle et suivant une trajectoire de montée jusqu'à une valeur choisie supérieure à une deuxième valeur seuil déterminée,
   - Ladite première étape d'application et ladite deuxième étape d'application étant mises en oeuvre pendant une durée déterminée, au moins égale à l'inverse de la fréquence statorique, en vue de permettre que le rotor du moteur électrique synchrone tourne à la fréquence statorique appliquée,
   - Une étape de diminution du courant de référence au-dessous de ladite première valeur seuil,
   - Une étape de commutation vers la loi de commande principale du moteur électrique synchrone une fois que le rotor tourne à une vitesse correspondant à ladite fréquence statorique.

2. Procédé selon la revendication 1, **caractérisé en ce que** le courant de référence (Iref) est maintenu à une valeur constante pendant la première étape d'application.

3. Procédé selon la revendication 2, **caractérisé en ce que** le courant de référence suit une rampe de montée jusqu'à ladite valeur constante.

4. Procédé selon la revendication 2, **caractérisé en ce que** la fréquence statorique est maintenue à une valeur constante pendant la deuxième étape d'application.

5. Système de commande d'un moteur électrique (M) synchrone comprenant une unité de commande (UC) comportant une loi de commande principale (L) exécutable pour commander le moteur électrique synchrone et une séquence de démarrage (ST) agencée pour remplacer ladite loi de commande principale (L) lors du démarrage du moteur électrique synchrone, ladite unité de commande (UC) étant **caractérisée en ce qu'**elle comprend :

   - Un premier module de détermination des tensions à appliquer sur les phases de sortie en fonction d'un courant de référence (Iref), ledit courant de référence ayant une valeur au moins supérieure à une première valeur seuil nécessaire au démarrage du moteur électrique synchrone,
   - Un deuxième module de détermination d'une fréquence à appliquer au stator en fonction d'une fréquence statorique (ωs), ladite fréquence statorique étant choisie supérieure à une deuxième valeur seuil déterminée, lesdits premier module et deuxième module étant exécutés pendant une durée déterminée, au moins égale à l'inverse de la fréquence statorique, en vue de permettre que le rotor du moteur électrique synchrone tourne à la fréquence statorique appliquée,

- Un module de commande d'une diminution du courant de référence au-dessous de ladite première valeur seuil,

- Un module de commutation vers la loi de commande principale (L) du moteur électrique synchrone une fois que le rotor tourne à une vitesse correspondant à ladite fréquence statorique (ωs).

6. Système de commande selon la revendication 5, **caractérisé en ce qu'**il comporte un convertisseur de puissance (D) connecté au moteur électrique (M) synchrone par trois phases de sortie et commandé par ladite unité de commande (UC).

7. Système de commande selon la revendication 6, **caractérisé en ce que** le convertisseur de puissance est connecté au moteur électrique synchrone via un filtre sinus (SF) et un transformateur (TR).

**Patentansprüche**

1. Steuerungsverfahren, das in einer Steuerungseinheit (UC) eines Stromrichters eingesetzt wird, der mit drei Ausgangsphasen an einen elektrischen Synchronmotor (M) angeschlossen ist, wobei die Steuerungseinheit eingerichtet ist, um ein Hauptsteuerungsgesetz (L) einzusetzen, um den elektrischen Synchronmotor zu steuern, **dadurch gekennzeichnet, dass** das Steuerungsverfahren eingerichtet ist, um das Hauptsteuerungsgesetz (L) beim Anlassen des elektrischen Synchronmotors (M) zu ersetzen, und dass es umfasst:

- einen ersten Schritt des Anlegens eines Referenzstroms, um an die Ausgangsphasen anzulegende Spannungen in Abhängigkeit vom Referenzstrom (Iref) zu bestimmen, wobei der Referenzstrom einen Wert zumindest größer als ein erster Grenzwert, der für das Anlassen des elektrischen Synchronmotors notwendig ist, hat,

- einen zweiten Schritt des Anlegens einer Statorfrequenz (ωs) in Abhängigkeit vom Referenzstrom, wobei die Statorfrequenz (ωs) einen Ausgangswert gleich Null und gemäß einer Anstiegsbahn bis zu einem Wert hat, der größer als ein zweiter bestimmter Grenzwert gewählt ist,

- wobei der erste Schritt des Anlegens und der zweite Schritt des Anlegens während einer bestimmten Dauer mindestens gleich dem Kehrwert der Statorfrequenz eingesetzt werden, um zu ermöglichen, dass sich der Rotor des elektrischen Synchronmotors mit der angelegten Statorfrequenz dreht,

- einen Schritt der Verringerung des Referenzstroms unter den ersten Grenzwert,

- einen Schritt des Umschaltens zu dem Hauptsteuerungsgesetz des elektrischen Synchronmotors, wenn sich der Rotor mit einer Geschwindigkeit entsprechend der Statorfrequenz dreht.

2. Verfahren nach Anspruch 1, **dadurch gekennzeichnet, dass** der Referenzstrom (Iref) auf einem konstanten Wert während des ersten Schrittes des Anlegens gehalten wird.

3. Verfahren nach Anspruch 2, **dadurch gekennzeichnet, dass** der Referenzstrom einer Anstiegsrampe bis zu dem konstanten Wert folgt.

4. Verfahren nach Anspruch 2, **dadurch gekennzeichnet, dass** die Statorfrequenz auf einem konstanten Wert während des zweiten Schrittes des Anlegens gehalten wird.

5. Steuerungssystem eines elektrischen Synchronmotors (M), umfassend eine Steuerungseinheit (UC), umfassend ein Hauptsteuerungsgesetz (L), das ausführbar ist, um den elektrischen Synchronmotor zu steuern, und eine Anlasssequenz (ST), die eingerichtet ist, um das Hauptsteuerungsgesetz (L) beim Anlassen des elektrischen Synchronmotors zu ersetzen, wobei die Steuerungseinheit (UC) **dadurch gekennzeichnet ist, dass** sie umfasst:

- ein erstes Modul zur Bestimmung der an die Ausgangsphasen anzulegenden Spannungen in Abhängigkeit von einem Referenzstrom (Iref), wobei der Referenzstrom einen Wert zumindest größer als ein erster Schwellenwert, der für das Anlassen des elektrischen Synchronmotors notwendig ist, hat,

- ein zweites Modul zur Bestimmung einer an den Stator anzulegenden Frequenz in Abhängigkeit von einer Statorfrequenz (ωs), wobei die Statorfrequenz größer als ein zweiter bestimmter Grenzwert gewählt ist, wobei das erste Modul und das zweite Modul während einer bestimmten Dauer mindestens gleich dem Kehrwert der Statorfrequenz ausgeführt werden, um zu ermöglichen, dass sich der Rotor des elektrischen Synchronmotors mit der angelegten Statorfrequenz dreht,

- ein Modul zur Steuerung einer Verringerung des Referenzstroms unter den ersten Grenzwert,

- ein Modul zum Umschalten auf das Hauptsteuerungsgesetz (L) des elektrischen Synchronmotors, wenn sich der Motor mit einer Geschwindigkeit entsprechend der Statorfrequenz (ωs) dreht.

6. Steuerungssystem nach Anspruch 5, **dadurch gekennzeichnet, dass** es einen Stromrichter (D) umfasst, der an den elektrischen Synchronmotor (M) mit drei Ausgangsphasen angeschlossen ist und von der Steuerungseinheit (UC) gesteuert wird.

7. Steuerungssystem nach Anspruch 6, **dadurch gekennzeichnet, dass** der Stromrichter an den elektrischen Synchronmotor über einen Sinusfilter (SF) und einen Transformator (TR) angeschlossen ist.

## Claims

1. Control method used in a control unit (UC) of a power converter connected by three output phases to a synchronous electric motor (M), said control unit being configured to implement a main control law (L) for controlling the synchronous electric motor, **characterized in that** said control method is configured to replace said main control law (L) upon starting of the synchronous electric motor (M) and **in that** it comprises:

    - a first step for applying a reference current to determine voltages to be applied to the output phases depending on the reference current (Iref), said reference current having a value at least higher than a first threshold value necessary for starting the synchronous electric motor;
    - a second step for applying a stator frequency (ωs) depending on said reference current, said stator frequency (ωs) being first selected at zero and following a rising ramp until a chosen value higher than a second given threshold value;
    - said first application step and said second application step being executed for a given duration, at least equal to the reciprocal of the stator frequency, so as to allow the rotor of the synchronous electric motor to rotate at the stator frequency applied;
    - a step for reducing the reference current below said first threshold value;
    - a step for switching the synchronous electric motor to the main control law once the rotor rotates at a speed corresponding to said stator frequency.

2. Method according to Claim 1, **characterized in that** the reference current (Iref) is kept at a constant value during the first step.

3. Method according to Claim 2, **characterized in that** the reference current follows a rising ramp so as to raise to said constant value.

4. Method according to Claim 2, **characterized in that** the stator frequency is kept at a constant value during the second step.

5. System for controlling a synchronous electric motor (M) comprising a control unit (UC) having a main control law (L) which can be executed so as to control the synchronous electric motor and a starting sequence (ST) configured to replace said main control law (L) upon starting of the synchronous electric motor, said control unit (UC) being **characterized in that** it comprises:

    - a first module for determining the voltages to be applied to the output phases depending on a reference current (Iref), said reference current having a value at least higher than a first threshold value necessary for starting the synchronous electric motor;
    - a second module for determining a frequency to be applied to the stator depending on a stator frequency (ωs), said stator frequency being chosen higher than a second given threshold value, said first module and second module being executed for a given duration, at least equal to the reciprocal of the stator frequency, so as to allow the rotor of the synchronous electric motor to rotate at the stator frequency applied;
    - a control module for reducing the reference current below said first threshold value;
    - a module for switching the synchronous electric motor to the main control law (L) once the rotor rotates at a speed corresponding to said stator frequency (ωs).

6. Control system according to Claim 5, **characterized in that** it comprises a power converter (D) connected to the synchronous electric motor (M) by three output steps and controlled by said control unit (UC).

7. Control system according to Claim 6, **characterized in that** the power converter is connected to the synchronous electric motor via a sinus filter (SF) and a transformer (TR).

**Fig. 1**

**Fig. 2**

Iref

*Fig. 3A*

V1

S1    S2                                                                t

ωs

*Fig. 3B*

V2

t

Iref

*Fig. 4A*

V1

t

ωs

*Fig. 4B*

V2

t

**EP 2 963 802 B1**

## RÉFÉRENCES CITÉES DANS LA DESCRIPTION

### Documents brevets cités dans la description

- US 7202618 B
- US 7508160 B1